# EUROPEAN PATENT APPLICATION

(11) **EP 3 832 924 A1**
(43) Date of publication of application: **09.06.2021**
(21) Application number: 18928317.9
(22) Date of filing: 03.08.2018
(51) Int. Cl.: H04L 1/06, H04W 72/04

(54) **USER TERMINAL AND RADIO COMMUNICATION METHOD**

(71) Applicant: NTT DoCoMo, Inc., Tokyo 100-6150 (JP)
(72) Inventor: OKAMURA, Masaya, Tokyo 100-6150 (JP); TAKEDA, Kazuaki, Tokyo 100-6150 (JP); HARADA, Hiroki, Tokyo 100-6150 (JP); MATSUMURA, Yuki, Tokyo 100-6150 (JP)
(74) Representative: Hoffmann Eitle
(86) International application number: PCT/JP2018/029304
(87) International publication number: WO 2020/026449

(57) **Abstract**

A user terminal according to one aspect of the present disclosure includes a receiving section and a control section. The receiving section receives setting information used to apply a space-time block code (STBC) to an uplink symbol. The control section determines, in the case where the number of uplink symbols in a given period is odd, a symbol pair to which the STBC is applied over a plurality of symbols of the given period or within the time of a specific symbol of the given period. According to one aspect of the present disclosure, it is possible to achieve appropriate transmit diversity using STBC even in the case where the number of UL symbols in a given period is odd.

## Description

### Technical Field

The present disclosure relates to user terminal and a radio communication method in a next-generation mobile communication system.

### Background Art

In the universal mobile telecommunications system (UMTS) network, the specifications of long-term evolution (LTE) have been drafted for the purpose of further increasing high speed data rates, providing lower delays and so on (see Non-Patent Literature 1). Further, the specifications of LTE Advanced (LTE-A, LTE Rel. 10, 11, 12, 13) have been made for the purpose of further increasing the capacity and advancement of LTE (LTE Rel. 8, 9).

Successor systems of LTE (for example, Future Radio Access (FRA), 5th generation mobile communication system (5G), 5G+ (plus), New Radio (NR), New radio access (NX), Future generation radio access (FX), LTE (referred to as Rel. 14 or 15 or later versions) are also under study.

In a radio communication system, a fading phenomenon in which communication quality fluctuates due to influence of a multipath is problematic. Diversity is a technique of compensating for fading. Among the diversity, diversity which is implemented by a transmission side transmitting signals using a plurality of antennas is referred to as transmit diversity. In transmit diversity, it is not always necessary to increase the number of receiving antennas on a reception side, and thus, received quality, area coverage, and the like, are expected to be improved, and increase of a circuit scale and power consumption on the reception side is expected to be prevented.

LTE-A (Rel-10) supports spatial orthogonal-resource transmit diversity (SORTD) that uses multiple PUCCH resources transmitted in different antenna ports transmissions for the physical uplink control channel (PUCCH).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In NR, the use of space-time block code (STBC) is being considered as a candidate for transmit diversity. In addition, in NR, the multi-slot transmission is also being considered.

In the case where the number of uplink (UL) symbols per slot is odd, there is a problem that if STBC is applied in the slot, there will be surplus symbols. Unless the measures for such case are clarified, appropriate UL transmission/reception fails to be performed, causing communication throughput, frequency utilization efficiency, or the like to deteriorate.

Thus, the present disclosure is intended to provide, as one of the objects, a user terminal and a radio communication method capable of achieving appropriate transmit diversity using STBC even in the case where the number of UL symbols in a given period is odd.

### Solution to Problem

A user terminal according to one aspect of the present disclosure includes a receiving section and a control section. The receiving section receives setting information used to apply a space-time block code (STBC) to an uplink symbol. The control section determines, in the case where the number of uplink symbols in a given period is odd, a symbol pair to which the STBC is applied over a plurality of symbols of the given period or within the time of a specific symbol of the given period.

### Advantageous Effects of Invention

According to one aspect of the present disclosure, it is possible to achieve appropriate transmit diversity using STBC even in the case where the number of UL symbols in a given period is odd.

### Brief Description of Drawings

Fig. 1 is a diagram illustrated to describe the concept of STBC.
Figs. 2A and 2B are diagrams illustrating an example of a UL slot configuration.
Fig. 3 is a diagram illustrating an example of pairing in Embodiment 2.1.
Fig. 4 is a diagram illustrating another example of pairing in Embodiment 2.1.
Fig. 5 is a diagram illustrating an example of pairing in Embodiment 2.2.1.
Fig. 6 is a diagram illustrating an example of pairing in Embodiment 2.2.2.
Fig. 7 is a diagram illustrating an example of pairing in Embodiment 2.3.
Fig. 8 is a diagram illustrating another example of pairing in Embodiment 2.3.
Fig. 9 is a diagram illustrating an example of the configuration of a UL slot assumed in a third embodiment.
Fig. 10 is a diagram illustrating an example of pairing in the third embodiment.
Fig. 11 is a diagram illustrating another example of pairing in the third embodiment.
Fig. 12 is a diagram illustrating still another example of pairing in the third embodiment.
Figs. 13A and 13B are diagrams illustrating an example of a fourth embodiment.
Figs. 14A and 14B are diagrams illustrating an example of a UL slot configuration assumed in a fifth embodiment.
Fig. 15 is a diagram illustrating an example of a schematic configuration of a radio communication system according to an embodiment.
Fig. 16 is a diagram illustrating an example of an overall configuration of a base station according to an embodiment.
Fig. 17 is a diagram illustrating an example of a functional configuration of a base station according to an embodiment.
Fig. 18 is a diagram illustrating an exemplary overall structure of a user terminal according to an embodiment.
Fig. 19 is a diagram illustrating an exemplary functional structure of a user terminal according to an embodiment.
Fig. 20 is a diagram illustrating an exemplary hardware structure of a base station and a user terminal according to an embodiment.

### Description of Embodiments

The use of transmit diversity is considered even for NR. Examples of a candidate for transmit diversity applied to the physical uplink-shared channel (PUSCH) include space-frequency block code (SFBC), single-carrier SFBC (SC-SFBC), space-time block code (STBC), spatial stream STBC (SS-STBC), antenna switching, cyclic delay diversity (CDD), or the like. SC-SFBC can be called peak-to-average power ratio (PAPR)-preserving SFBC or the like.

In one example, STBC is a scheme of encoding multiple resources to the time domain using Alamouti code (encoding signals of these resources collectively as one block). More specifically, the signal/channel to which STBC is applied is transmitted from a different transmitting antenna after the orthogonalization performed on a symbol pair with the Alamouti code and the REs to be mapped are exchanged.

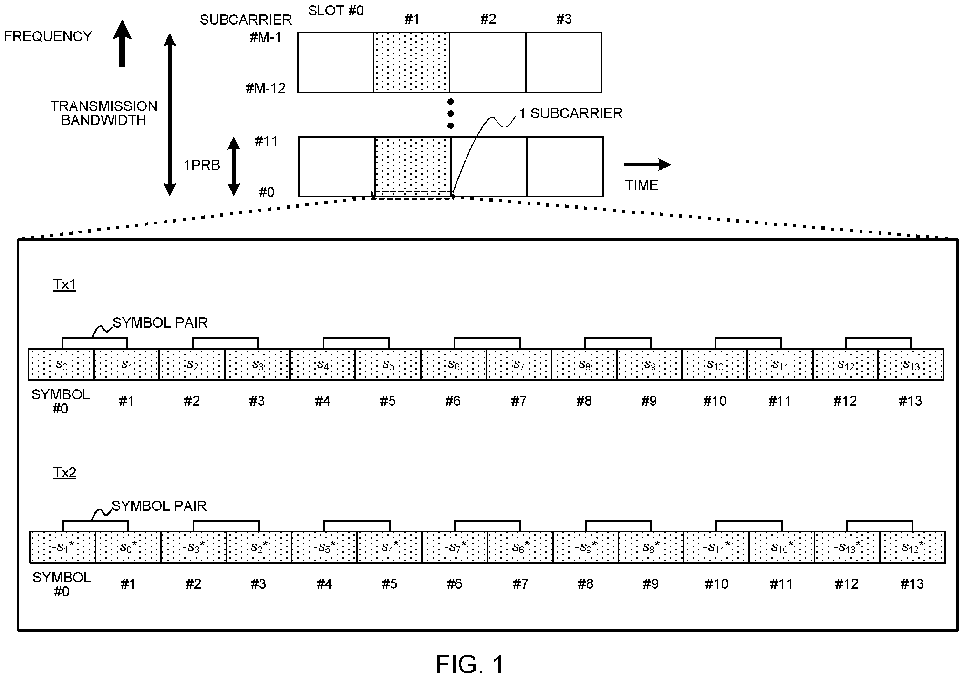

Fig. 1 is a diagram illustrated to describe the concept of STBC. Fig. 1 illustrates an example in which UE transmits PUSCH in slot #1 over a transmission bandwidth corresponding to the number of subcarriers M. One resource block is assumed to have a configuration of 12 subcarriers × 14 symbols. In addition, the slot has 14 symbols. Note that the number of resource elements included in the resource block, the number of symbols included in the slot, or the like is not limited thereto.

UE transmits PUSCH of slot #1 using STBC. The UE can perform pairing from the initial UL symbol (a PUSCH symbol) to the tail in the slot. In this description, the pairing can also mean to determine two symbols (a symbol pair) to which STBC is applied (or to apply STBC to the symbol pair).

In Fig. 1, the set of symbols #2n and #2n+1 (where n = 0, 1, ..., 6) corresponds to the symbol pair. The UE encodes a symbol pair (sᵢ and sᵢ₊₁) with Alamouti code, transmits it through one antenna (Tx1) in the order of sᵢ, sᵢ₊₁, and transmits it through the other antenna (Tx2) at the same timing in the order of -sᵢ₊₁*, sᵢ* (where "*" indicates complex conjugate). A base station is capable of performing simple spatiotemporal decoding processing on the received signal to decode the original sᵢ and sᵢ₊₁.

Although only one subcarrier is illustrated in detail in Fig. 1, the same is true for other subcarriers. The same is true for the case where only one subcarrier is illustrated in detail also in the following drawings.

Moreover, the term "symbol" used herein can be read interchangeably as a symbol for a UL signal or channel (e.g., PUSCH or PUCCH) to which STBC is applied. In one example, "initial symbol of a slot" can mean the initial symbol in the slot to which PUSCH is assigned.

STBC has the advantage of capable of suppressing peak-to-average power ratio (PAPR) even in being applied to a single-carrier waveform such as discrete Fourier transform spread orthogonal frequency division multiplexing (DFT spread OFDM or DFT-s-OFDM).

In addition, in NR, the multi-slot transmission is also being considered. The multi-slot transmission is transmission over a plurality of slots and can be referred to as slot aggregation, repetition transmission, or the like. In each slot of the multi-slot transmission, signals having the same contents can be transmitted, or signals having different contents can be transmitted.

In one example, PUCCH repetition can be set in the UE using higher layer signaling for PUCCH formats 1, 3, and 4 with a transmission period of four symbols or more. The repetition factor can be set in common for all of PUCCH formats 1, 3, and 4.

Moreover, the higher layer signaling herein can be, for example, any one of radio resource control (RRC) signaling, medium access control (MAC) signaling, broadcast information, or the like, or a combination thereof.

The MAC signaling can use, for example, a MAC control element (MAC CE), a MAC protocol data unit (PDU), or the like. Examples of the broadcast information include master information block (MIB), system information block (SIB), remaining minimum system information (RMSI), and other system information (OSI).

Further, the repetition factor can be set using higher layer signaling (e.g., RRC parameter "aggregationFactorUL" and RRC parameter "repK" for configured grant PUSCH) for PUSCH repetition. The number of PUSCH repetitions can be set to, in one example, 1, 2, 4, 8, or the like. In addition, the redundancy version (RV) of PUSCH in each slot during PUSCH repetition transmission can be different or the same.

Moreover, the repetition factor and the repetition number herein can be read interchangeably. Besides, the repetition number can represent the number of repetitions of specific UL transmission (e.g., PUSCH or PUCCH).

By the way, in the case where the number of UL symbols per slot is odd, there is a problem that if STBC is applied in the slot, there will be surplus symbols. Unless the measures for such case are clarified, appropriate UL transmission/reception fails to be performed, causing communication throughput, frequency utilization efficiency, or the like to deteriorate.

Thus, the present inventors have conceived the setting for appropriately achieving the transmit diversity using STBC and also the operation of UE and a base station.

Hereinafter, embodiments according to the present disclosure will be described in detail with reference to the drawings. The radio communication method according to each of the embodiments may be applied independently, or may be applied in combination with others.

Moreover, the following embodiments mainly show an example of applying STBC to PUSCH, but those skilled in the art are able to perform similar processing for other UL signals/channels on the basis of the present disclosure. In other words, PUSCH can be read interchangeably as other UL transmission types (such as PUCCH).

### (Radio Communication Method)

### <First Embodiment>

In a first embodiment, the UE can explicitly set the UL transmit diversity using higher layer signaling. In one example, the UE can set each of UL repetition transmission and transmit diversity over a plurality of slots using higher layer signaling.

Moreover, the transmit diversity setting can include at least one of whether or not the transmit diversity is applied, the type of transmit diversity to be applied (e.g., STBC or SFBC), or the like.

The UE can implicitly set the UL transmit diversity. The UE can determine the transmit diversity setting on the basis of the set number of repetitions (e.g., RRC parameter "aggregationFactorUL"). In one example, the UE that is set to have the repetition number larger than one (aggregationFactorUL > 1) can apply STBC as transmit diversity.

Further, the UE can determine the setting of the transmit diversity on the basis of the set number of UL symbols per slot (e.g., RRC parameter "nrofUplinkSymbols"). In one example, a UE in which the number of symbols per UL slot is set to an even number can apply STBC as transmit diversity.

A UE in which the number of UL symbols per slot is set to an odd number can perform the paring from the initial UL symbol (PUSCH symbol) in a slot to the tail (or from the last UL symbol (PUSCH symbol) to the head) and can perform control so that STBC is not applied to the surplus symbols.

According to the first embodiment described above, it is possible to set the transmit diversity in the UE, for example, with a small amount of information.

### <Second Embodiment>

In a second embodiment, the description is given of the processing on the premise that the UE is set to have the number of repetitions larger than one (aggregationFactorUL > 1) and is set to apply STBC as transmit diversity. The setting of the number of repetitions that is larger than one can be read interchangeably as the setting of multi-slot transmission. The setting of the transmit diversity can be determined on the basis of that of the first embodiment described above.

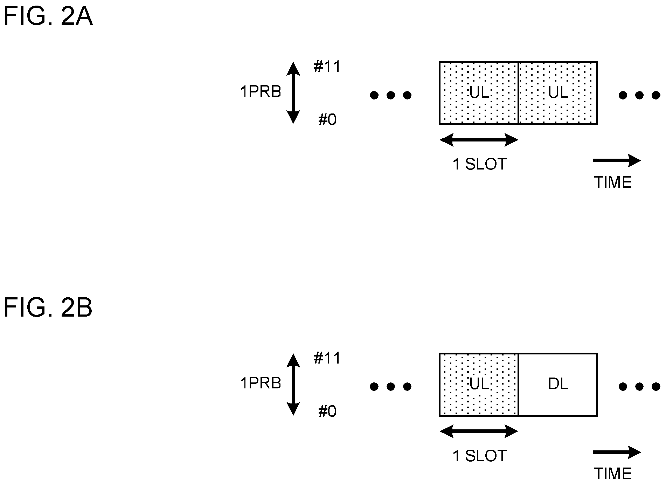

Moreover, the description below uses the UL slot configuration illustrated in Fig. 2A or 2B. Figs. 2A and 2B are diagrams illustrating an example of the configuration of the UL slot. Fig. 2A corresponds to the case where the UE is instructed to use a slot configuration (slot format) that includes consecutive (adjacent) UL slots. Fig. 2B corresponds to the case where the UE is set with a slot configuration that includes discontinuous (non-adjacent) UL slots.

Moreover, the slot configuration can be set (notified) in the UE using higher layer signaling (e.g., RRC parameter "TDD-UL-DL-Pattern"), physical layer signaling (e.g., slot format indicator (SFI) of DCI format 2_0), or a combination thereof.

The slot configuration to be notified can include the number of DL slots (full DL slots) from the head of the UL-DL pattern, the following number of DL symbols, the number of UL slots from the end of the pattern, the preceding number of UL symbols, the symbol configuration for each slot (e.g., the number and position of DL/UL symbols), or the like.

The case where the premise and the slot configuration of Fig. 2A described above are used is hereinafter also referred to as pattern A. Besides, the case where the premise and the slot configuration of Fig. 2B described above are used is also referred to as pattern B.

### [Embodiment 2.1]

In Embodiment 2.1, the description is given of a case where the UE sets the number of UL symbols in a slot to odd and the number of repetitions to even (e.g., 2, 4, 8, ...). Moreover, herein, the setting of the number of UL symbols to odd can include not only explicitly setting the number of UL symbols to odd but also setting the number of position of UL symbols to odd.

In this case, the UE starts the pairing from the head symbol in the odd-numbered slots out of slots performing the repetition transmission. The UE pairs the last symbol of the odd-numbered slot with the head symbol of the even-numbered slot across the slots.

In other words, the UE pairs the last symbol of the even-numbered slot with the symbol in the slot. In addition, the UE also pairs the initial symbol of the odd-numbered slot with the symbol in the slot.

Moreover, the "odd-numbered slot" used herein is not intended to limit the slot index of the slot in the radio frame to odd, and indicates a slot corresponding to the odd-numbered repetition regardless of the consecutive slot (pattern A) and the discontinuous slot (pattern B). The same applies to the "even-numbered slot".

In other words, the UE can perform the pairing between adjacent slots for pattern A. In addition, for pattern B, the UE can perform the pairing in the order of the UL slots to be transmitted.

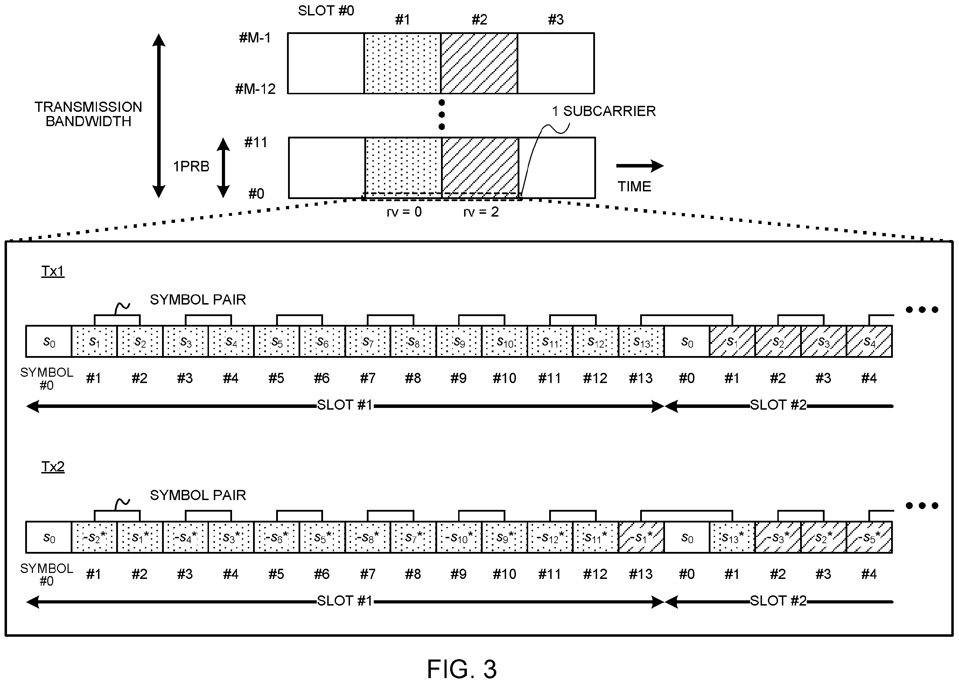

Fig. 3 is a diagram illustrating an example of pairing in Embodiment 2.1. In this example, the UE performs repetition transmission over slots #1 and #2 on the basis of the number of repetitions = 2 (corresponding to pattern A). Moreover, different rvs are used for each slot in the repetition transmission, such as rv (ID of RV) = 0 in slot #1 and rv = 2 in slot #2. However, the value of rv is not limited thereto. In addition, the same rv can be used in a plurality of slots in the repetition transmission.

In this example, the number of UL symbols in a slot for repetition transmission is 13. Symbol #0 is, for example, a symbol (such as DL or Flexible) that is not used for UL, and symbols #1 to #13 are symbols for UL.

The STBC is not necessarily applied to signal s₀ transmitted at symbol #0 in each slot. In the example of Fig. 3, the last UL symbol (symbol #13) in the odd-numbered slot (slot #1) is paired with the first UL symbol (symbol #1) in the even-numbered slot (slot #2). In this case, the UE transmits a signal (-s₁* in slot #2) that should originally be transmitted to the following slot at symbol #13 in slot #1 via Tx2, and transmits a signal (s₁₃* in slot #1) that should originally be transmitted to the previous slot at symbol #1 in slot #2.

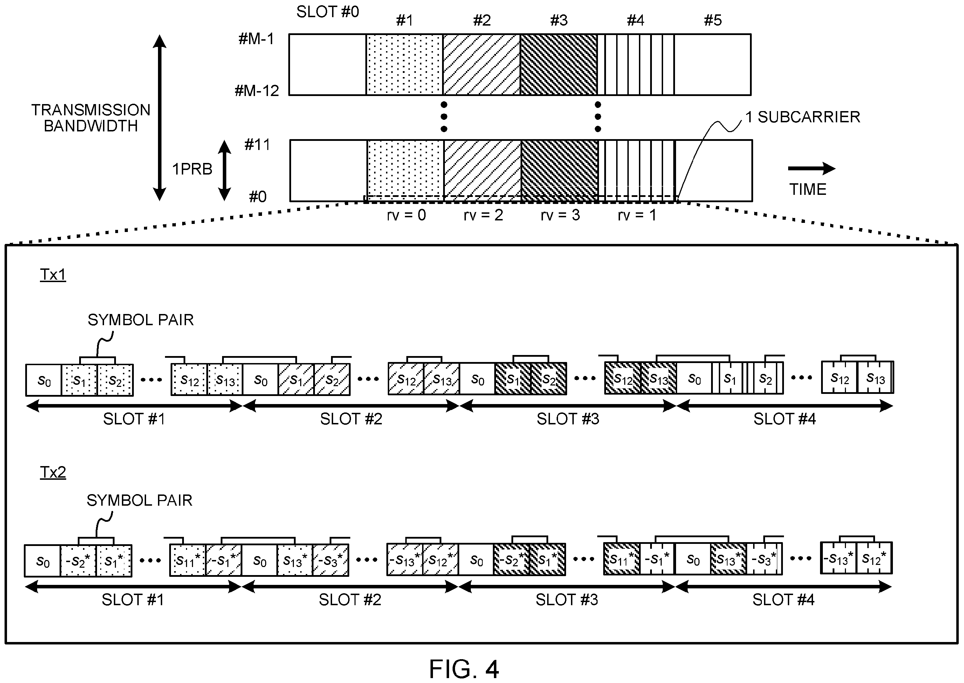

Fig. 4 is a diagram illustrating another example of pairing in Embodiment 2.1. In this example, the UE performs repetition transmission over slots #1 to #4 on the basis of the number of repetitions = 4 (corresponding to pattern A). Moreover, different rvs are used for each slot in the repetition transmission, such as rv (ID of RV) = 0 in slot #1, rv = 2 in slot #2, rv = 3 in slot #3, and rv = 1 in slot #4. However, the value of rv is not limited thereto. In addition, the same rv can be used in a plurality of slots in the repetition transmission. Description of rv will not be given repeatedly because the description will be the same in the following drawings.

In this example, the number of UL symbols in a slot for repetition transmission is 13. Symbol #0 is, for example, a symbol that is not used for UL, and symbols #1 to #13 are symbols for UL.

The STBC is not necessarily applied to signal s₀ transmitted at symbol #0 in each slot. In the example of Fig. 4, the last UL symbol (symbol #13) of the odd-numbered slots (slots #1 and #3) is paired with the first UL symbol (symbol #1) of the even-numbered slots (slots #2 and #4).

On the other hand, the first UL symbols in the odd-numbered slots are paired in the same slot. In addition, the last UL symbols in the even-numbered slots are paired in the same slot.

### [Embodiment 2.2]

In Embodiment 2.2, the pairing considering the symbol for a reference signal (e.g., a demodulation reference signal (DMRS)) in a slot is described.

The UE, when performing PUSCH transmission, specifies the number of PUSCH symbols, the number of DMRS symbols, or the like in one slot on the basis of higher layer signaling, physical layer signaling, or a combination thereof.

In one example, the UE can set a PUSCH-time domain resource allocations list using higher layer signaling (e.g., "PUSCH-TimeDomainResourceAllocationList" information element of RRC). The list can include one or more entries (parameter sets), each entry corresponding to an individual PUSCH symbol number.

Further, the UE can determine one entry in the set list and specify the number of PUSCH symbols scheduled on the basis of the determined entry, depending on a value of the field (time-domain resource allocation field) included in the DCI (can be called UL DCI, UL grant, DCI format 0_0, DCI format 0_1, or the like) that schedules PUSCH.

The UE can determine the number of DMRS symbols in a slot for transmitting PUSCH on the basis of a parameter included in the higher layer signaling (e.g., the "DMRS-UplinkConfig" information element of RRC).

Moreover, DMRS in the following description can be read interchangeably as any signal/channel different from PUSCH.

### [[Embodiment 2.2.1]]

Embodiment 2.2.1 corresponds to a configuration in which the value obtained by subtracting the number of DMRS symbols from the number of PUSCH symbols in one slot (= the number of PUSCH symbols - the number of DMRS symbols) is even. In this case, the UE performs pairing in one slot (without across the slots). The value corresponds to the number of symbols (symbols actually used for PUSCH transmission) to which STBC is applied in the slot.

In Embodiment 2.2.1, the number of repetitions that is set in the UE and the number of UL symbols in the slot can be even or odd.

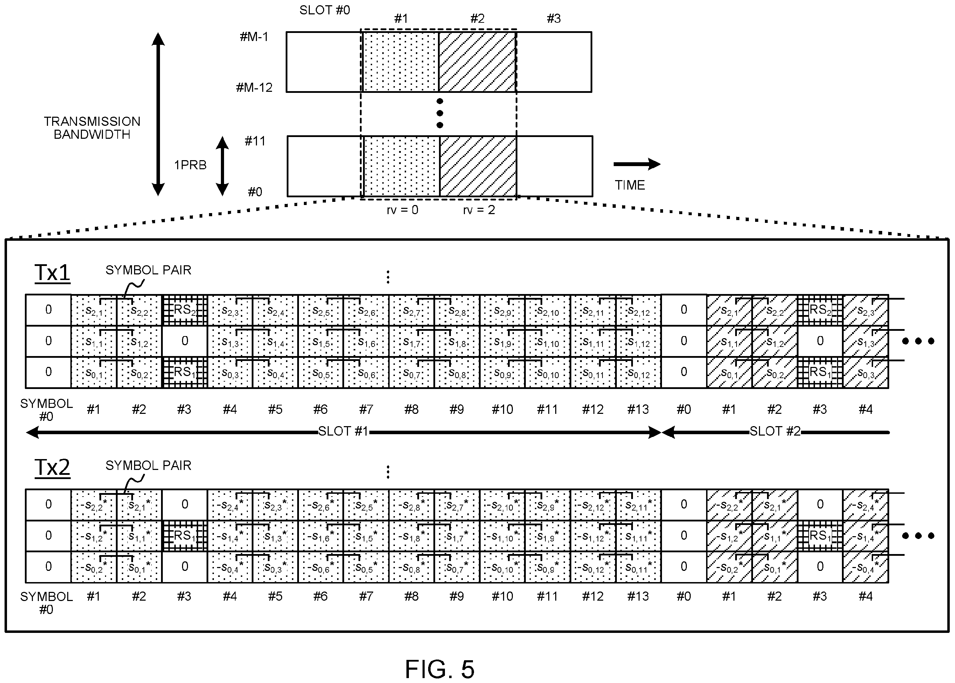

Fig. 5 is a diagram illustrating an example of pairing in Embodiment 2.2.1. In this example, the UE performs repetition transmission over slots #1 and #2 on the basis of the number of repetitions = 2. Although Fig. 5 illustrates symbols for three subcarriers, similar arrangement and pairing rules can apply to other subcarriers within the transmit bandwidth.

In this example, the number of PUSCH symbols in a slot for repetition transmission is 13, and the number of DMRS symbols is 1. Symbol #0 is, for example, a symbol (such as DL or Flexible) that is not used for UL, and symbols #1 to #13 are PUSCH symbols. Of the PUSCH symbols, symbol #3 corresponds to the DMRS symbol.

In this figure, s_{k,i} can represent the i^{th} signal (data, PUSCH) in a slot in the subcarrier k. Besides, in the figure, "0" can correspond to a resource that the UE mutes (or does not allocate PUSCH). The same applies to the figures described later.

In the case of the example illustrated in Fig. 5, the number of symbols to which STBC is applied in a slot is "the number of PUSCH symbols - the number of DMRS symbols = 12", thus the pairing can be completed in one slot. In this event, the DMRS symbol (symbol #3) can be excluded from the pairing target.

Moreover, the DMRS resources transmitted from each antenna are preferably arranged to be orthogonal to each other for interference reduction. In one example, as illustrated in Fig. 5, the UE can transmit DMRS at even-numbered index subcarriers (subcarriers 0, 2, ...) via Tx1 and transmit DMRS at odd-numbered index subcarriers (subcarrier 1, 3, ...) via Tx2.

In the example of Fig. 5, the DMRS sequence of the subcarrier k of Tx1 is mapped to the subcarrier k+1 of Tx2. In other words, the same sequence is transmitted using different subcarriers in Tx1 and Tx2, but the configuration of the DMRS sequence to be transmitted, the mapping position of subcarriers, or the like is not limited to this example.

### [[Embodiment 2.2.2]]

Embodiment 2.2.2 corresponds to a configuration in which a value obtained by subtracting the number of DMRS symbols from the number of PUSCH symbols in one slot (= the number of PUSCH symbols - the number of DMRS symbols) is odd. In this case, the UE performs the pairing across slots. In one example, as described in Embodiment 2.1, the UE can perform the pairing between the last symbol in the odd-numbered slot and the head symbol in the even-numbered slot across slots.

In Embodiment 2.2.2, the number of repetitions that is set in the UE is even. On the other hand, the number of UL symbols in the slot that is set in the UE can be even or odd.

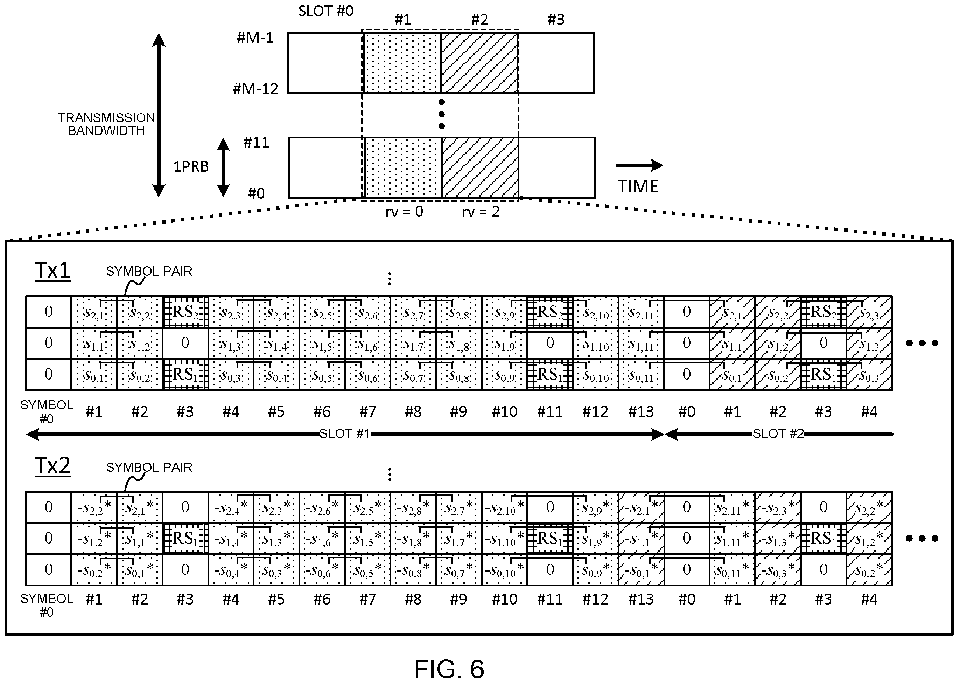

Fig. 6 is a diagram illustrating an example of pairing in Embodiment 2.2.2. In this example, the UE performs repetition transmission over slots #1 and #2 on the basis of the number of repetitions = 2. Although Fig. 6 illustrates symbols for three subcarriers as a representative, similar arrangement and pairing rules can apply to other subcarriers within the transmit bandwidth.

In this example, the number of PUSCH symbols in a slot for repetition transmission is 13, and the number of DMRS symbols is 2. Symbol #0 is, for example, a symbol (such as DL or Flexible) that is not used for UL, and symbols #1 to #13 are PUSCH symbols. Of the PUSCH symbols, symbol #3 and #11 corresponds to the DMRS symbol.

In the case of the example in Fig. 6, the number of symbols to which STBC is applied in a slot is "the number of PUSCH symbols - the number of DMRS symbols = 11", the pairing fails to be completed in one slot. The UE pairs the last PUSCH symbol in slot #1 (symbol #13 in slot #1) with the initial PUSCH symbol in slot #2 (symbol #1 in slot #2) .

DMRS symbols (symbols #3 and #11) can be excluded from the pairing. The arrangement of DMRS, the configuration of the sequences, or the like can be similar to those in the example of Fig. 5, and thus no duplicate description will be given.

Moreover, Embodiment 2.2 shows an example in which STBC is not applied to DMRS, but is not limited to this example. In one example, the DMRS symbol can be paired with the PUSCH symbol. In the case where there is a plurality of DMRS symbols in a slot, the pairing can be performed between these DMRS symbols.

### [Embodiment 2.3]

In Embodiments 2.1 and 2.2, in some configurations, pairing is performed between slots, while in other configurations, pairing is not necessarily performed. Embodiment 2.3 corresponds to the configuration in which pairing is always performed between slots in the case where the UE sets the number of repetitions to be larger than one.

In a slot that performs repetition transmission, the UE can perform the pairing only on symbols between different slots. In one example, the UE can perform the pairing on the same symbols in odd-numbered slots and even-numbered slots out of the slots that perform repetition transmission. In other words, it can be assumed that the UE does not perform the pairing between symbols in one slot.

In Embodiment 2.3, the number of repetitions that is set in the UE is even. On the other hand, the number of UL symbols in the slot that is set in the UE can be even or odd.

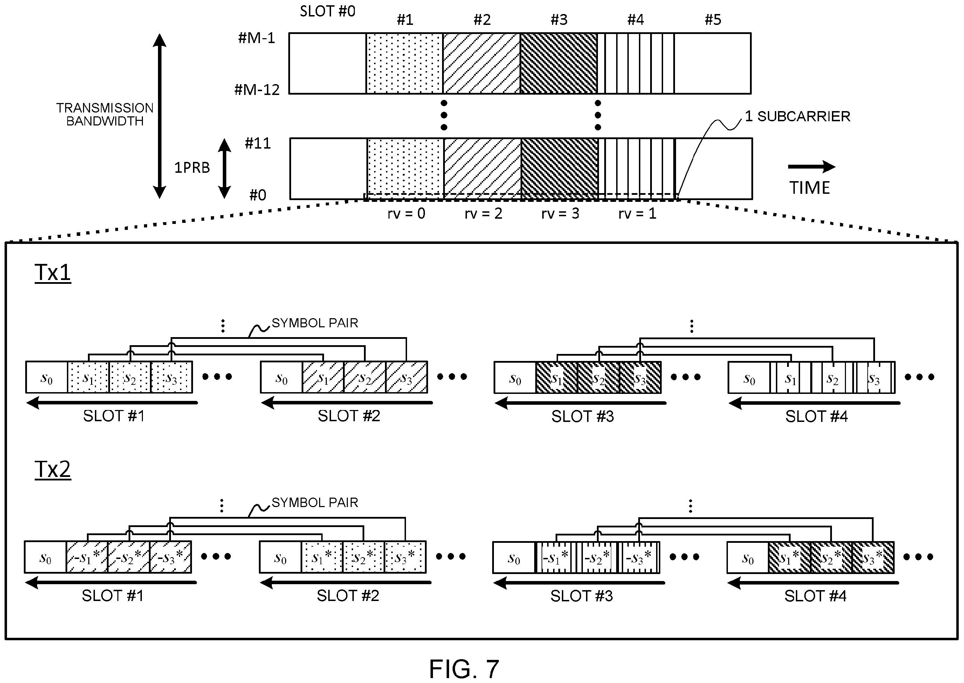

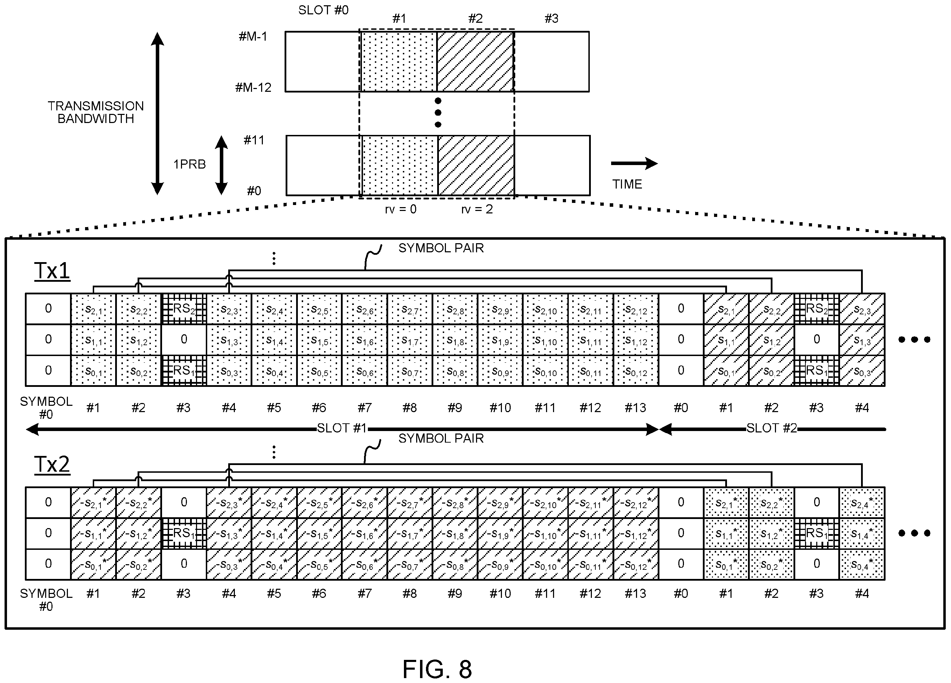

Fig. 7 is a diagram illustrating an example of pairing in Embodiment 2.3. In this example, the preconditions other than pairing are the same as those in Fig. 4. Fig. 8 is a diagram illustrating another example of pairing in Embodiment 2.3. In this example, the preconditions other than pairing are the same as those in Fig. 5.

In the examples of Figs. 7 and 8, symbol s_{odd,i} of symbol index #i of the odd-numbered slot (slot #1 or #3) is paired with symbol s_{even,i} of the symbol index #i (symbols of the same index) of the even-numbered slot (slot #2 or #4).

As illustrated in these figures, s_{odd,i} can be transmitted at the symbol index #i of the odd-numbered slot of Tx1, s_{even,i} can be transmitted at the symbol index #i of the even-numbered slot of Tx1. Besides, -s_{even,i}* can be transmitted at the symbol index #i of the odd-numbered slot of Tx2 and s_{odd,i}* can be transmitted at the symbol index #i of the even-numbered slots of Tx2.

Moreover, Fig. 8 illustrates an example in which STBC is not applied to DMRS, but is not limited to this example. In Embodiment 2.3, for example, DMRS symbols in different slots can be paired with each other.

According to the second embodiment described above, it is possible to achieve appropriate transmit diversity using STBC even in the case where the UE sets the number of repetitions of UL transmission to a value larger than one.

### <Third Embodiment>

In a third embodiment, the processing is described on the premise that the UE sets the number of UL symbols in a slot to odd and is set to apply STBC as transmit diversity. Moreover, the setting of the transmit diversity can be determined on the basis of that of the first embodiment described above.

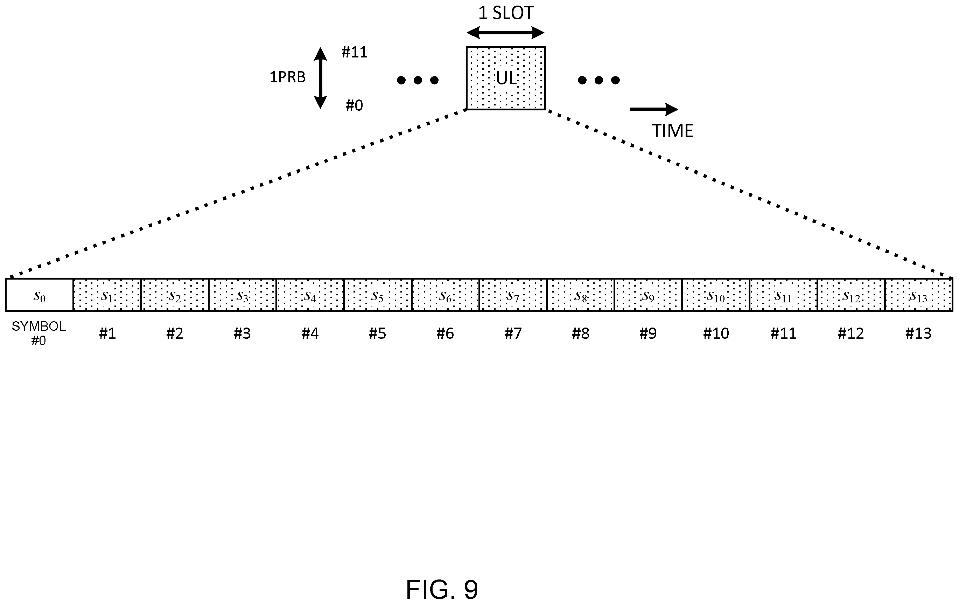

Fig. 9 is a diagram illustrating an example of the configuration of a UL slot assumed in a third embodiment. In this example, the UE is set with the number of UL symbols per slot (e.g., RRC parameter "nrofUplinkSymbols") to 13, and the UL symbols correspond to symbols #1 to #13.

In the third embodiment, the number of repetitions (aggregationFactorUL) set in the UE can be larger than one or can be one. In addition, the number of repetitions can be odd or even.

In the third embodiment, the UE sets the subcarrier spacing (SCS) of a specific symbol in the slot to an even multiple (e.g., two, four, six, or eight times) of SCS of another symbol. The term "SCS of another symbol" herein can be read interchangeably as SCS of the original symbol, SCS that is set for the transmission signal (channel), default SCS, or the like.

In the specific symbol period, the UE is capable of mapping X symbols having a symbol length of 1/X with X times (where X = even) SCS, and pairs the X symbols two by two. The UE pairs the symbols in the slot other than the specific symbol period with each other.

The specific symbol described above can be referred to as a symbol to which STBC is applied, a symbol to which the transmit diversity is applied, or the like. The symbol to which STBC is applied can be at least one symbol, and can be, for example, a symbol at the head in a slot, a symbol at the tail in a slot, or the like. In addition, the symbol to which STBC is applied can be both the head symbol and tail symbol, or can be all UL symbols or all symbols in a slot.

Information regarding the symbol to which STBC is applied (e.g., information used to specify symbol's identity in a slot) can be notified to the UE using higher layer signaling, physical layer signaling, or a combination thereof, or can be specified in advance by specifications.

Moreover, in the present disclosure, in the case where the SCS of a symbol is an even multiple, the UE can multiply the transmission bandwidth by an even number during the period of the symbol, or can reduce the number of resource blocks while keeping the transmission bandwidth as it is. In the latter case, the UE can adjust the modulation scheme, encoding rate, or the like so that the transmission signal having the same amount of information can be transmitted during the period of the symbol.

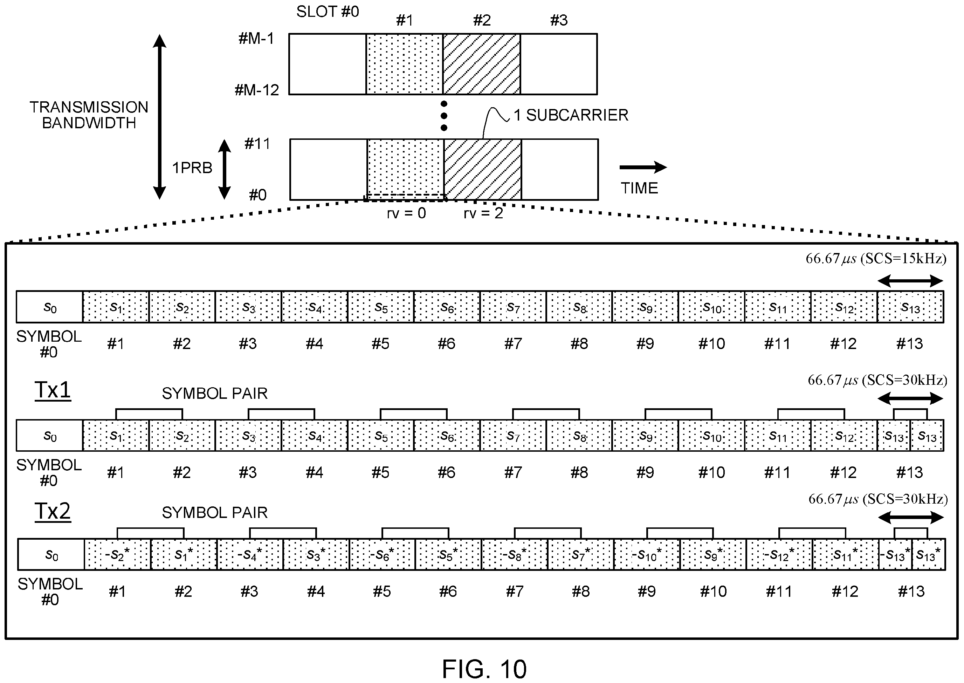

Fig. 10 is a diagram illustrating an example of pairing in the third embodiment. In this example, the UE performs repetition transmission over slots #1 and #2 on the basis of the number of repetitions = 2. In this example, the number of UL symbols in a slot for repetition transmission is 13, and symbols #1 to #13 correspond to UL.

In this example, the last UL symbol (symbol #13) of each slot corresponds to the symbol to which STBC is applied, which is described above. In one example, the UE can duplicate a signal s₁₃ of the UL symbol and initially generate a signal for two symbols (133.34 µs) of SCS = 15 kHz. Then, the UE can orthogonalize the signals for the two symbols (STBC is applied) to generate two symbols {s₁₃, s₁₃} and two symbols {-s₁₃*, s₁₃*}.

The UE doubles SCSs of the two symbols {s₁₃, s₁₃}, and can transmit two symbols of SCS = 30 kHz {s₁₃, s₁₃} via Tx1 in the period corresponding to the symbol #13 of the original SCS = 15 kHz.

The UE doubles SCSs of the two symbols {-s₁₃*, s₁₃*}, and can transmit two symbols of SCS = 30 kHz {-s₁₃*, s₁₃*} via Tx2 in the period corresponding to the symbol #13 of the original SCS = 15 kHz.

Moreover, there may a case where the UE has the number of UL symbols in a slot that is not set to odd. In this case, if STBC is set to be applied as the transmit diversity, the UE can be assumed to apply the pairing scheme of the third embodiment.

### [Modification of Third Embodiment]

Fig. 10 illustrates an example in which the delay related to SCS switching can be ignored in the case where the SCS differs between the symbols, but the delay can be taken into consideration in the symbol mapping.

In one example, the UE can delay or advance the transmission timing of the symbol to which STBC is applied with the X times SCS described above by a given offset. The given offset can be indicated as a given time unit (such as symbol, slot, subframe, or microsecond). Information regarding the given offset can be notified to the UE using higher layer signaling, physical layer signaling, or a combination thereof. In addition, the given offset can be specified by specifications.

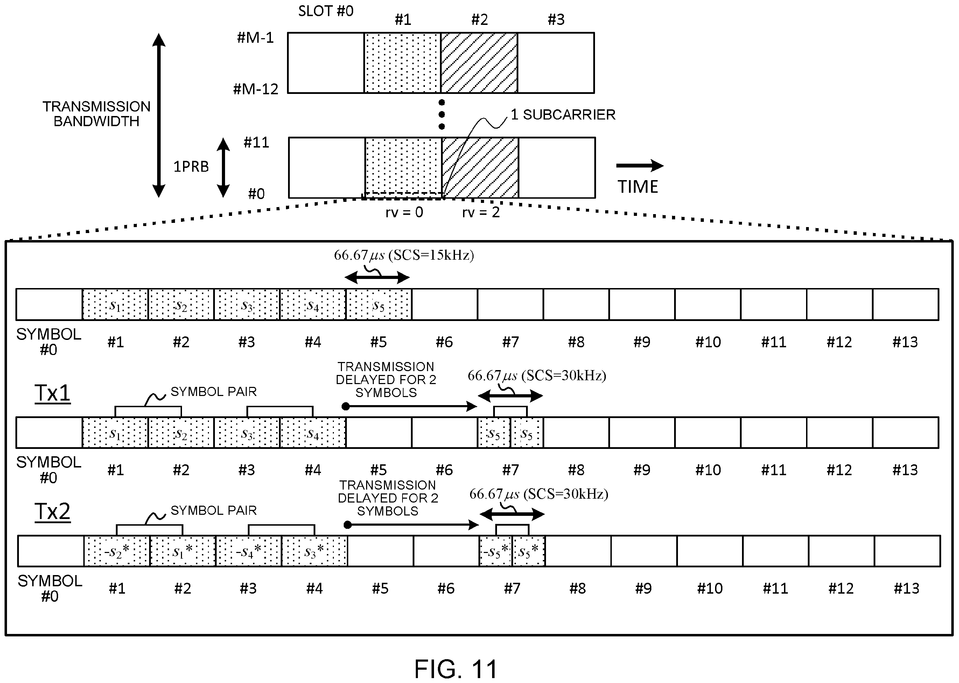

Fig. 11 is a diagram illustrating another example of pairing in the third embodiment. This example is similar to that of Fig. 10, and the number of UL symbols in a slot is assumed to 13, but the transmission at five symbols of symbols #1 to #5 is assumed to be instructed in slot #1. In addition, the given offset is assumed to two symbols.

In this example, the last UL transmission scheduled symbol (symbol #5) in slot #1 corresponds to the symbol to which STBC is applied. The UE starts transmitting a symbol of two times SCS corresponding to the signal s₅ of the relevant symbol from symbol #7 two symbols after the original symbol #5 to be transmitted. The UE is assumed to perform processing of switching the SCS of the transmission symbol in the period until the completion of symbol #6.

In the case where the transmission timing of the symbol to which STBC is applied with the X times SCS described above corresponds to the tail symbol of the slot (the last UL symbol), the UE can be assumed that the offset described above fails to be applied and this symbol is not transmitted (dropped). In other words, the UE can be assumed that STBC is not applied in such slots.

On the other hand, even in the case where the transmission timing of the symbol to which STBC is applied with the X times SCS described above corresponds to the tail symbol (the last UL symbol) of the slot, the UE can transmit this symbol. However, the UE can be assumed that there is a period during which signal transmission is not necessary for at least one of the symbol to which this STBC is applied, the following symbol, and the preceding symbol. The period can be referred to as, for example, a transmission-skippable period.

The transmission-skippable period can be indicated as a given time unit (such as symbol, slot, subframe, or microsecond). Information regarding the transmission-skippable period can be notified to the UE using higher layer signaling, physical layer signaling, or a combination thereof. In addition, the transmission-skippable period can be specified by specifications or can depend on the implementation of the UE.

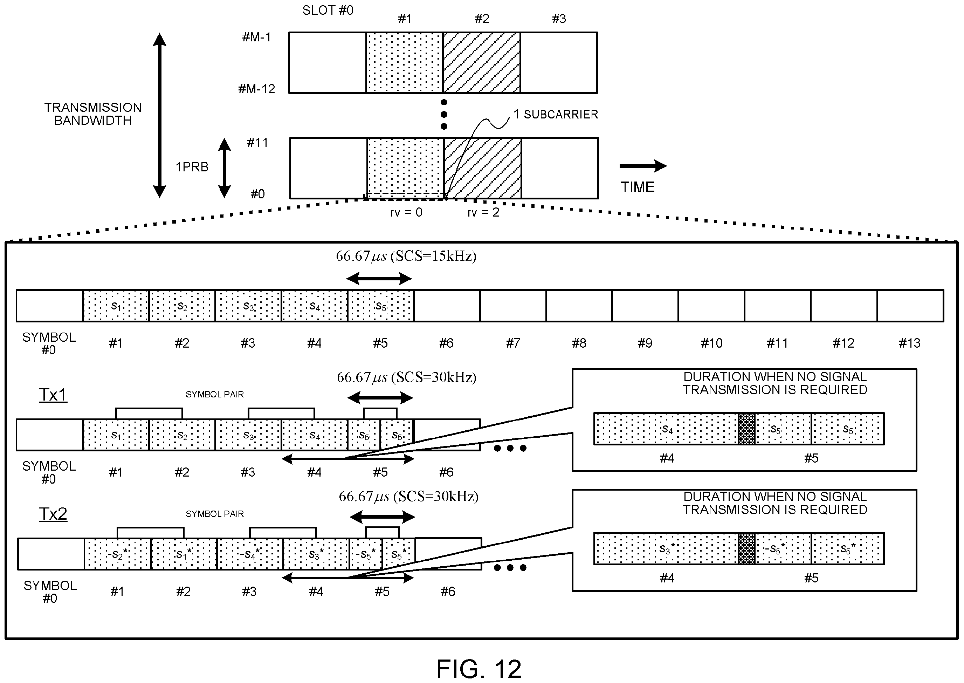

Fig. 12 is a diagram illustrating still another example of pairing in the third embodiment. This example differs from that of Fig. 11 in that the number of UL symbols in a slot is five, and symbols #1 to #5 correspond to UL.

In this example, the last UL transmission scheduled symbol (symbol #5) in slot #1 corresponds to the symbol to which STBC is applied. The UE starts transmitting the two times SCS symbol corresponding to the signal s₅ of the symbol from the symbol #5 originally scheduled to be transmitted. A certain period from the start of the symbol #5 corresponds to the transmission-skippable period. During this period, the UE does not necessarily transmit s₅ via Tx1 or does not necessarily transmit -s₅* via Tx2.

Moreover, the UE can control all the symbols (or all UL symbols) in the slot having odd-numbered UL symbols to be even times the SCS (even multiple of SCS of symbols in another slot). In this case, there is an advantage that scheduling, UE processing, or the like is simplified. Moreover, the "SCS of a symbol in another slot" can be read interchangeably as SCS of the original symbol, SCS set for the transmission signal (channel), the default SCS, or the like.

According to the third embodiment described above, the UE is able to achieve appropriate transmit diversity using STBC even in a slot in which the number of UL symbols is odd.

### <Fourth Embodiment>

In a fourth embodiment, the UE selectively uses the method in which the pairing between slots occurs (e.g., the second embodiment) and the method in which the pairing between slots does not occur (e.g., the third embodiment) on the basis of given conditions.

In one example, the UE can assume to apply STBC on the basis of the method in which the pairing between slots occurs in a plurality of UL slots in the case where the interval between the plurality of UL slots is less than a given threshold (which can be expressed as Nᵢₙₜₑᵣᵥₐₗ or the like). The UE can otherwise assume to apply STBC on the basis of the method in which the pairing between slots does not occur (pairing is performed only between symbols in a slot).

The given threshold can be indicated as a given time unit (such as symbol, slot, subframe, or microsecond). Information regarding the given threshold can be notified to the UE using higher layer signaling, physical layer signaling, or a combination thereof. Moreover, the given threshold can be specified by specifications.

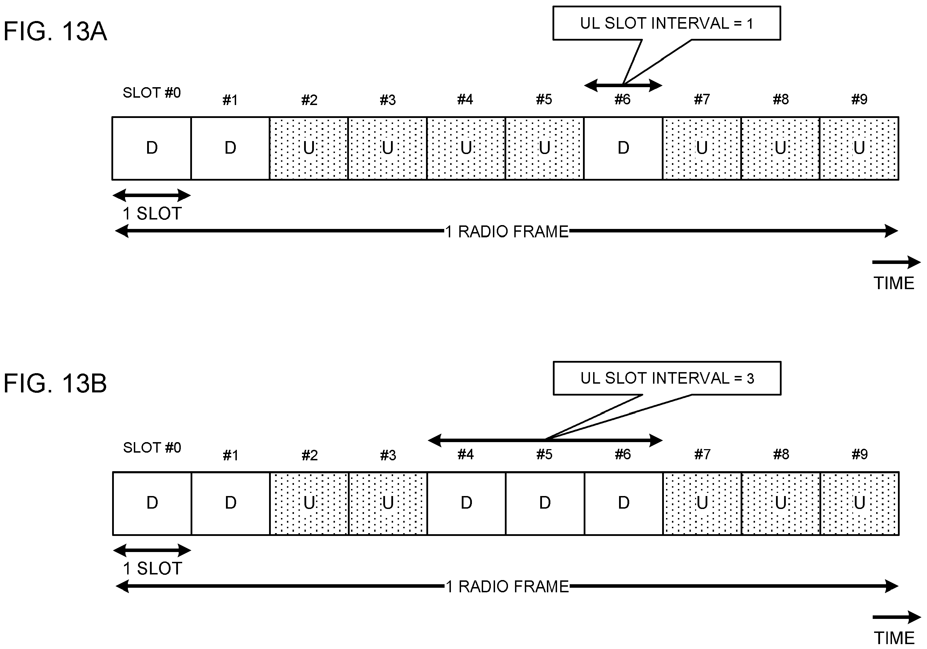

Figs. 13A and 13B are diagrams illustrating an example of a fourth embodiment. It is assumed that Nᵢₙₜₑᵣᵥₐₗ has three slots. Fig. 13A illustrates an example in which slots #0, #1, and #6 are set (instructed) to be DL slots and slots #2 to #5 and #7 to #9 are set (instructed) to be UL slots for the UE. The distance between slots #5 and #7 is one and is less than Nᵢₙₜₑᵣᵥₐₗ, so the UE can perform the pairing between symbols of these slots on the basis of the second embodiment.

Fig. 13B illustrates an example in which slots #0, #1, and #4 to #6 are set (instructed) to be DL slots, and slots #2 to #3 and #7 to #9 are set (instructed) to be UL slots for UE. The distance between slots #3 and #7 is three and is equal to or larger than Nᵢₙₜₑᵣᵥₐₗ, so the UE can perform closed pairing in these slots on the basis of the third embodiment.

Moreover, in Figs. 13A and 13B, the description is that the "UL slot spacing" is the number of slots other than UL slot between UL slots, but is not limited to this definition. The "UL slot interval" can be the interval from the start of one UL slot to the start of another slot. According to this definition, the interval between slots #5 and #7 in Fig. 13A is two slots, and the interval between slots #3 and #7 in Fig. 13B is four slots.

According to the fourth embodiment described above, it is possible to prevent the pairing between slots from being performed in the case where there is too much space between UL slots, thereby reducing the delay in UL transmission.

### <Fifth Embodiment>

A fifth embodiment relates to a pairing method in the case where frequency hopping is applied to a UL signal.

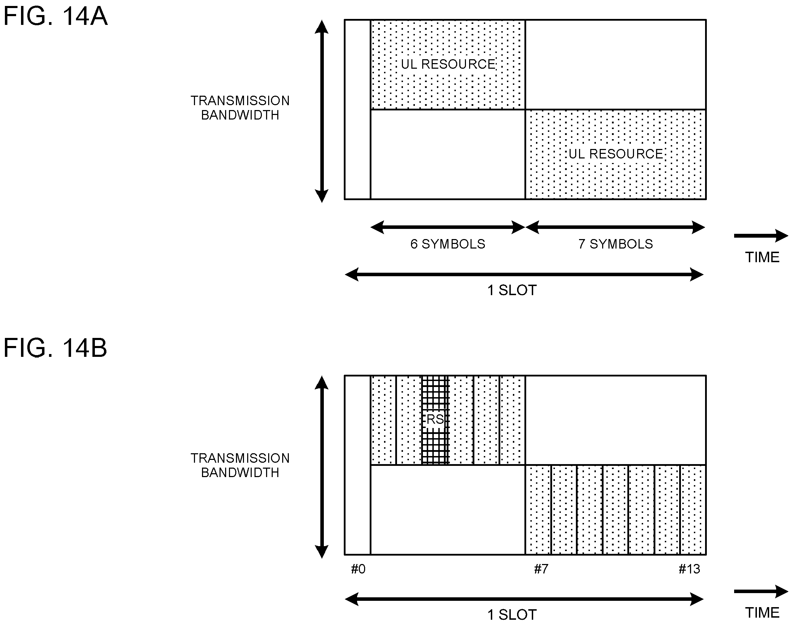

Figs. 14A and 14B are diagrams illustrating an example of a UL slot configuration assumed in a fifth embodiment. In this example, the UL symbol corresponds to symbols #1 to #13.

In the case of Fig. 14A, the UE hops the first hop (first half six symbols) and the second hop (second half seven symbols) to different frequencies in the transmission bandwidth and transmits them. In this case, the number of symbols in the second hop is odd, so it is conceivable that there will be a remainder in symbols to be paired in a slot.

Fig. 14B is similar to Fig. 14A, except that the third symbol (symbol #4) of the first hop is DMRS. In the case where STBC is not applied to DMRS, the number of symbols to which STBC is applied in the first hop is odd. The UE can pair the symbol of the first hop with the symbol of the second hop, but it is conceivable that such pairing is not suitable in some cases from the viewpoint of frequency selectivity.

Thus, the UE can control the SCS of all symbols (or all UL symbols) in a slot to be an even multiple (e.g., an even multiple of the SCS of the original symbol) in the slot to which frequency hopping is applied.

The UE can control the SCS of the symbols in the first half (the first hop) or the second half (the second hop) to be even in the slot to which frequency hopping is applied. Of these hops, hops having odd-numbered symbols can be an even multiple.

The UE can pair symbols of the same frequency between slots on the basis of Embodiment 2.3 in the case where the UE is set to the number of repetitions larger than one.

According to the fifth embodiment described above, the UE is able to achieve appropriate transmit diversity using STBC even in the slot where frequency hopping is applied to the UL signal.

### <Others>

The UE can transmit, to the base station, UE capability information (UE capability) as to whether or not pairing between adjacent slots of pattern A is possible to be performed. The UE can transmit, to the base station, UE capability information as to whether or not pairing between discontinuous slots of pattern B is possible to be performed.

Further, the UE can transmit, to the base station, UE capability information as to whether or not one or more of the pairing methods of the second (Embodiments 2.1, 2.2, and 2.3), third, fourth, and fifth embodiments are possible to be performed.

The base station can transmit information used to specify a pairing method to be used by the UE on the basis of the UE capability information reported from the UE, and can control the DL or UL scheduling, slot configuration, or the like of the UE.

In the embodiments described above, the description is given on the assumption that the symbol pair upon paring between slots by the UE is the symbols of the i^{th} and i+1^{th} slots of repetition transmission, but is not limited to this combination. In one example, pairing between slots can be performed between symbols in any slot of repetition transmission.

Further, the UE can apply STBC in each of the embodiments described above in one or more units of control. Examples of the unit of control include any one of a component carrier (CC), a CC group, a cell group, a PUCCH group, a MAC entity, a frequency range (FR), a band, a bandwidth part (BWP), or the like, or a combination thereof. The unit of control can be simply called a group.

The STBC of each embodiment described above can be available for PUCCH or PUSCH transmission of a particular UCI type. Moreover, the UCI type can mean any one of HARQ-ACK, SR (positive and negative SRs), CSI (may include such as CSI part 1 or CSI part 2), or a combination thereof.

The CSI can include at least one of channel quality indicator (CQI), precoding matrix indicator (PMI), a CSI-RS resource indicator (CRI), SS/PBCH block resource indicator (SSBRI or SS/PBCH block indicator), layer indicator (LI), rank indicator (RI), layer-1 reference signal received power (L1-RSRP), reference signal received quality in layer 1 (L1-RSRQ), signal to interference plus noise ratio in layer 1 (L1-SINR), signal to noise ratio in layer-1 (L1-SNR), or the like.

The CSI part 1 can include information having a relatively small number of bits (e.g., such as RI or wideband CQI). The CSI part 2 can include information having a relatively large number of bits (e.g., such as subband CQI or PMI) such as information determined on the basis of the CSI part 1.

### (Radio Communication System)

A configuration of a radio communication system according to one embodiment of the present disclosure is hereinafter described. In this radio communication system, communication is performed using one or a combination of the radio communication methods according to the embodiments of the present disclosure.

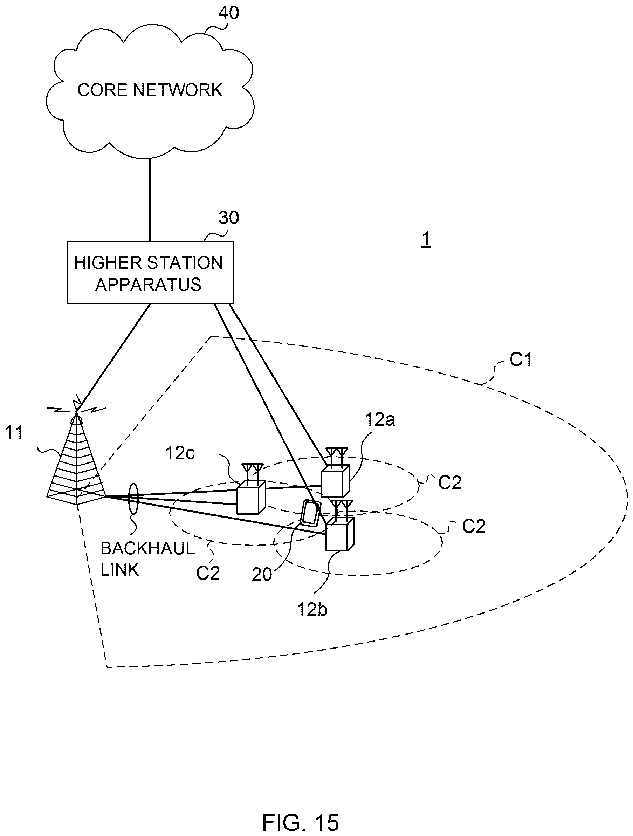

Fig. 15 is a diagram illustrating an example of a schematic configuration of a radio communication system according to an embodiment. At least one of carrier aggregation (CA) in which a plurality of fundamental frequency blocks (component carriers) in units of system bandwidth (for example, 20 MHz) are aggregated and dual connectivity (DC) may be applied to a radio communication system 1.

Note that the radio communication system 1 may be referred to as "LTE (Long Term Evolution)," "LTE-A (LTE-Advanced)," "LTE-B (LTE-Beyond)," "SUPER 3G, " "IMT-Advanced," "4G (4th generation mobile communication system)," "5G (5th generation mobile communication system)," "NR (New Radio)," "FRA (Future Radio Access)," "New-RAT (Radio Access Technology)," and the like, or may be seen as a system to implement these.

The radio communication system 1 includes a base station 11 that forms a macro cell C1 covering a relatively wide coverage, and base stations 12 (12a to 12c) that are arranged within the macro cell C1 and form small cells C2 that are narrower than the macro cell C1. Also, a user terminal 20 is placed in the macro cell C1 and in each small cell C2. The arrangement, number and the like of cells and user terminals 20 are not limited to the aspects illustrated in the drawings.

The user terminal 20 can connect with both the base station 11 and the base stations 12. It is assumed that the user terminal 20 uses the macro cell C1 and the small cells C2 at the same time using CA or DC. Furthermore, the user terminal 20 may apply CA or DC using a plurality of cells (CCs).

Between the user terminal 20 and the base station 11, communication can be carried out using a carrier of a relatively low frequency band (for example, 2 GHz) and a narrow bandwidth carrier (referred to as an "existing carrier", a "legacy carrier" and so on). Meanwhile, between the user terminal 20 and the base stations 12, a carrier of a relatively high frequency band (for example, 3.5 GHz, 5 GHz and so on) and a wide bandwidth may be used, or the same carrier as that used in the base station 11 may be used. Note that the structure of the frequency band for use in each base station is by no means limited to these.

Furthermore, in each cell, the user terminal 20 may perform communication using at least one of time division duplex (TDD) and frequency division duplex (FDD). Further, in each cell (carrier), a single numerology may be applied, or a plurality of different numerologies may be applied.

A numerology may be a communication parameter applied to at least one of transmission and reception of a certain signal or channel, and may indicate, for example, at least one of a subcarrier spacing, a bandwidth, a symbol length, a cyclic prefix length, a subframe length, a TTI length, the number of symbols per TTI, a radio frame configuration, specific filtering processing performed by a transceiver in the frequency domain, specific windowing processing performed by a transceiver in the time domain, etc.

For example, a physical channel that is different in at least one of the subcarrier spacing of OFDM symbols constituting it and the number of OFDM symbols may be said to have a different numerology.

Between the base station 11 and the base station 12 (or between two base stations 12) may be connected by wire (for example, an optical fiber, an X2 interface, and so on in compliance with the common public radio interface (CPRI)) or wirelessly.

The base station 11 and the base stations 12 are each connected with higher station apparatus 30, and are connected with a core network 40 via the higher station apparatus 30. Note that the higher station apparatus 30 may be, for example, an access gateway apparatus, a radio network controller (RNC), a mobility management entity (MME), and so on, but is by no means limited to these. Also, each base station 12 may be connected with the higher station apparatus 30 via the base station 11.

Note that the base station 11 is a base station having a relatively wide coverage, and may be referred to as a "macro base station", an "aggregate node", an "eNB (eNodeB)", a "transmission/reception point" and so on. Also, the base stations 12 are base stations having local coverages, and may be referred to as "small base stations", "micro base stations", "pico base stations", "Femto base stations", "HeNBs (Home eNodeBs)", "RRHs (Remote Radio Heads)", "transmission/reception points" and so on. Hereinafter, the base stations 11 and 12 will be collectively referred to as "base stations 10", unless these are distinguished from each other.

Each user terminal 20 are terminals to support various communication schemes such as LTE, LTE-A, NR, and the like, and may be either mobile communication terminals (mobile stations) or stationary communication terminals (fixed stations).

In the radio communication system 1, as a radio access scheme, orthogonal frequency division multiple access (OFDMA) is applied to a downlink, and at least one of single carrier-frequency division multiple access (SC-FDMA) and OFDMA is applied to an uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and other radio access schemes can be used as well.

In the radio communication system 1, a physical downlink shared channel (PDSCH) shared by each user terminal 20, a physical broadcast channel (PBCH), a downlink control channel and the like are used as downlink channels. User data, higher layer control information, a system information block (SIB) and the like are transmitted on the PDSCH. Further, a master information block (MIB) is transmitted by the PBCH.

The downlink control channel includes a physical downlink control channel (PDCCH), an enhanced physical downlink control channel (EPDCCH), a physical control format indicator channel (PCFICH), a physical hybrid-ARQ indicator channel (PHICH) and the like. Downlink control information (DCI) and the like including scheduling information of at least one of the PDSCH and PUSCH are transmitted on the PDCCH.

Note that the DCI that schedules DL data reception may be called as DL assignment, and the DCI that schedules UL data transmission may be called as UL grant.

The number of OFDM symbols used in the PDCCH may be transmitted on the PCFICH. Delivery acknowledgement information of hybrid automatic repeat request (HARQ) to the PUSCH (for example, also called as retransmission control information, HARQ-ACK, ACK/NACK and the like) may be transmitted on the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. User data, higher layer control information, and so on are transmitted by the PUSCH. Also, downlink radio quality information (channel quality indicator (CQI)), delivery acknowledgement information, scheduling request (SR), and so on are transmitted by the PUCCH. By means of PRACH, random access preambles for establishing connections with cells are transmitted.

In the radio communication systems 1, cell-specific reference signal (CRSs), channel state information reference signal (CSI-RSs), demodulation reference signal (DMRSs), positioning reference signal (PRSs) and so on are communicated as downlink reference signals. Also, in the radio communication system 1, a measurement reference signal (sounding reference signal (SRS)), a demodulation reference signal (DMRS), and so on are transmitted as uplink reference signals. Note that the DMRS may be referred to as a "user terminal-specific reference signal (UE-specific Reference Signal)". Also, the reference signals to be communicated are by no means limited to these.

### (Base Station)

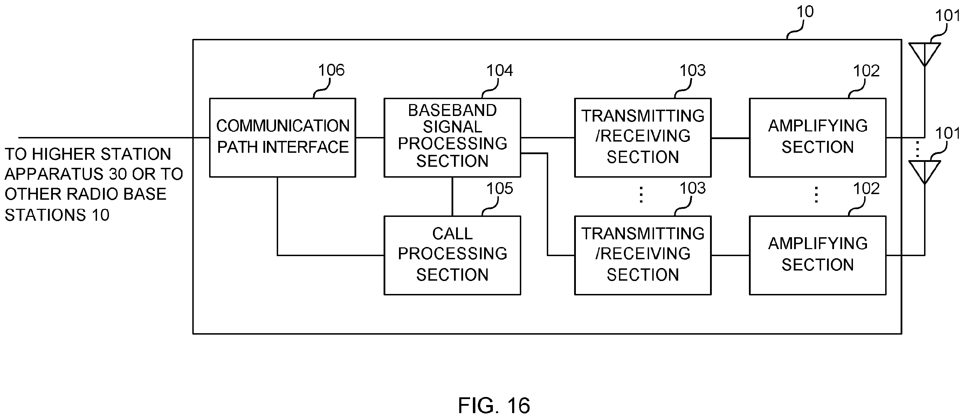

Fig. 16 is a diagram illustrating an example of an overall configuration of a base station according to an embodiment. A base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the base station 10 to the user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to the transmitting/receiving sections 103.

The transmitting/receiving section 103 converts a baseband signal output from the baseband signal processing section 104 after being precoded in every antenna into a signal in a radio frequency band, and transmits the signal. The radio frequency signals having been subjected to frequency conversion in the transmitting/receiving sections 103 are amplified in the amplifying sections 102, and transmitted from the transmitting/receiving antennas 101. The transmitting/receiving section 103 can be constituted by a transmitter/receiver, a transmitting/receiving circuit or transmitting/receiving device that can be described based on general understanding of the technical field to which the present disclosure pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as configuring and releasing) of communication channels, manages the state of the base stations 10 and manages the radio resources, and the like.

The communication path interface 106 transmits and receives signals to and from the higher station apparatus 30 via a given interface. Also, the communication path interface 106 may transmit and receive signals (backhaul signaling) with other base stations 10 via an inter-base station interface (which is, for example, optical fiber that is in compliance with the CPRI (Common Public Radio Interface), the X2 interface, and the like).

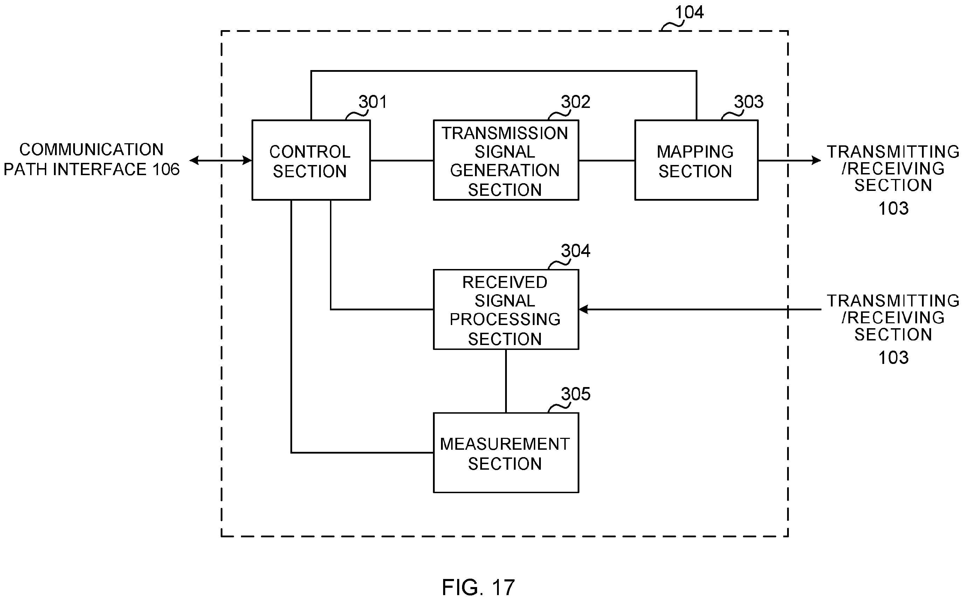

Fig. 17 is a diagram illustrating an example of a functional configuration of a base station according to an embodiment. Note that, although this example will primarily show functional blocks that pertain to characteristic parts of the present embodiment, it may be assumed that the base station 10 has other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the base station 10, and some or all of these configurations may not be included in the baseband signal processing section 104.

The control section (scheduler) 301 controls the whole of the base station 10. The control section 301 can be constituted by a controller, a control circuit, or control device that can be described based on general understanding of the technical field to which the present disclosure pertains.

For example, the control section 301 controls the generation of signals in the transmission signal generation section 302, the allocation of signals in the mapping section 303, and the like. Further, the control section 301 controls the signal receiving processing in the received signal processing section 304, the measurements of signals in the measurement section 305, and so on.

The control section 301 controls scheduling (e.g., resource allocation) of system information, a downlink data signal (e.g., a signal transmitted using the downlink shared channel), and a downlink control signal (e.g., a signal transmitted using the downlink control channel). The control section 301 controls the generation of downlink control signals, downlink data signals and so on, based on the results of deciding whether or not retransmission control is necessary for uplink data signals, and so on.

The control section 301 controls the scheduling of synchronization signals (for example, the PSS (Primary Synchronization Signal)/SSS (Secondary Synchronization Signal)), downlink reference signals (for example, the CRS, the CSI-RS, the DMRS, etc.), and the like.

The control section 301 controls scheduling of uplink data signal (e.g., a signal transmitted using an uplink shared channel), an uplink control signal (e.g., a signal transmitted using an uplink control channel), a random access preamble, an uplink reference signal, and the like.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit, or a signal generation device that can be described based on general understanding of the technical field to which the present disclosure pertains.

The transmission signal generation section 302 generates, for example, based on the instruction from the control section 301, at least one of the DL assignment that notifies the downlink data allocation information and the UL grant that notifies the uplink data allocation information. DL assignments and UL grants are both DCI, and follow the DCI format. Also, the downlink data signals are subjected to the coding process, the modulation process and so on, by using coding rates and modulation schemes that are determined based on, for example, channel state information (CSI) reported from each user terminal 20.

The mapping section 303 maps the downlink signals generated in the transmission signal generation section 302 to given radio resources based on commands from the control section 301, and outputs these to the transmitting/receiving sections 103. The mapping section 303 can be constituted by a mapper, a mapping circuit, or a mapping device that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, and so on). The received signal processing section 304 can be constituted by a signal processor, a signal processing circuit, or a signal processing device that can be described based on general understanding of the technical field to which the present disclosure pertains.

The received signal processing section 304 outputs, to the control section 301, information decoded by the receiving processing. For example, when a PUCCH to contain an HARQ-ACK is received, the received signal processing section 304 outputs this HARQ-ACK to the control section 301. In addition, the received signal processing section 304 outputs at least one of the received signal and the signal after the receiving process to the measurement section 305.

The measurement section 305 conducts measurements with respect to the received signals. The measurement section 305 can be constituted by a measurer, a measurement circuit, or a measurement device that can be described based on general understanding of the technical field to which the present disclosure pertains.

For example, the measurement section 305 may perform RRM (Radio Resource Management) measurements, CSI (Channel State Information) measurements and so on, based on the received signals. The measurement section 305 may measure the received power (for example, reference signal received power (RSRP)), the received quality (for example, reference signal received quality (RSRQ), signal to interference plus noise ratio (SINR), signal to noise ratio (SNR)), the signal strength (for example, received signal strength indicator (RSSI)), the transmission path information (for example, CSI), and so on. The measurement results may be output to the control section 301.

Moreover, the transmitting/receiving section 103 can transmit, to the user terminal 20, setting information used to apply transmit diversity (e.g., STBC) to the uplink symbol, setting information for multi-slot transmission, or the like.

In the case where the number of uplink symbols in a given period (e.g., a slot or one hop in the slot) is odd, the control section 301 can control the user terminal 20 so that the user terminal 20 determines a symbol pair to which STBC is applied over a plurality of symbols in the given period.

In the case where the number of uplink symbols in the given period is odd, the control section 301 can control the user terminal 20 so that the user terminal 20 determines a symbol pair to which STBC is applied within the time of a specific symbol (e.g., the last symbol) in the given period.

### (User Terminal)

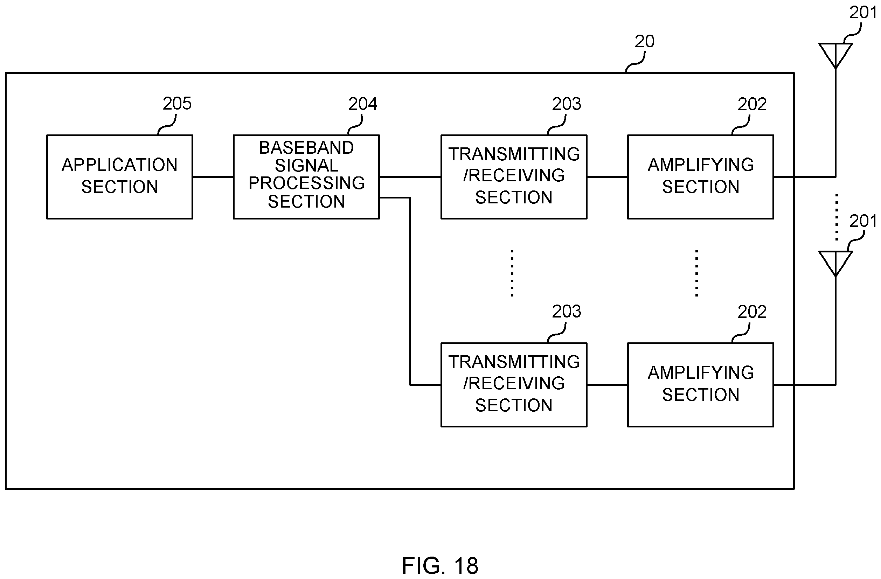

Fig. 18 is a diagram illustrating an exemplary overall structure of a user terminal according to an embodiment. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. The transmitting/receiving sections 203 can be constituted by a transmitter/receiver, a transmitting/receiving circuit or transmitting/receiving device that can be described based on general understanding of the technical field to which the present disclosure pertains. Note that a transmitting/receiving section 203 may be structured as a transmitting/receiving section in one entity, or may be constituted by a transmitting section and a receiving section.

The baseband signal processing section 204 performs receiving processes for the baseband signal that is input, including an FFT process, error correction decoding, a retransmission control receiving process and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

Baseband signals that are output from the baseband signal processing section 204 are converted into a radio frequency band in the transmitting/receiving sections 203 and transmitted. The radio frequency signals having been subjected to frequency conversion in the transmitting/receiving sections 203 are amplified in the amplifying sections 202, and transmitted from the transmitting/receiving antennas 201.

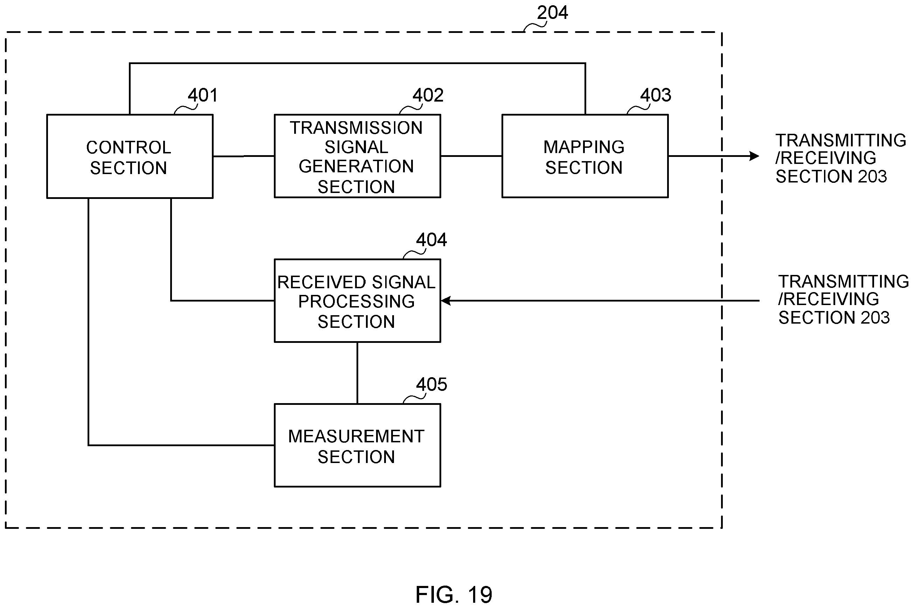

Fig. 19 is a diagram illustrating an exemplary functional structure of a user terminal according to an embodiment. Note that, although this example will primarily show functional blocks that pertain to characteristic parts of the present embodiment, it may be assumed that the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations may be included in the user terminal 20, and some or all of the configurations need not be included in the baseband signal processing section 204.

The control section 401 controls the whole of the user terminal 20. The control section 401 can be constituted by a controller, a control circuit, or control device that can be described based on general understanding of the technical field to which the present disclosure pertains.

The control section 401, for example, controls the generation of signals in the transmission signal generation section 402, the allocation of signals in the mapping section 403, and so on. Further, the control section 401 controls the signal receiving processing in the received signal processing section 404, the measurements of signals in the measurement section 405, and so on.

The control section 401 acquires, from the received signal processing section 404, the downlink control signal, the downlink data signal, and the like transmitted from the base station 10. The control section 401 controls the generation of the uplink control signal, the uplink data signal, or the like on the basis of the downlink control signal or the like as a result of determining whether or not retransmission control for the downlink data signal is necessary.

When the control section 401 acquires various types of information notified from the base station 10 from the received signal processing section 404, the control section 401 may update the parameters used for control based on the information.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit, or a signal generation device that can be described based on general understanding of the technical field to which the present disclosure pertains.

For example, the transmission signal generation section 402 generates uplink control signals such as delivery acknowledgement information, channel state information (CSI) and so on, based on commands from the control section 401. Also, the transmission signal generation section 402 generates uplink data signals based on instructions from the control section 401. For example, when a UL grant is included in a downlink control signal that is reported from the base station 10, the control section 401 instructs the transmission signal generation section 402 to generate an uplink data signal.

The mapping section 403 maps the uplink signals generated in the transmission signal generation section 402 to radio resources based on commands from the control section 401, and output the result to the transmitting/receiving section 203. The mapping section 403 can be constituted by a mapper, a mapping circuit, or a mapping device that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals, and so on) that are transmitted from the base station 10. The received signal processing section 404 can be constituted by a signal processor, a signal processing circuit, or a signal processing device that can be described based on general understanding of the technical field to which the present disclosure pertains. Also, the received signal processing section 404 can constitute the receiving section according to the present disclosure.

The received signal processing section 404 outputs the decoded information that is acquired through the receiving processing to the control section 401. The received signal processing section 404 outputs, for example, broadcast information, system information, RRC signaling, DCI and so on, to the control section 401. In addition, the received signal processing section 404 outputs at least one of the received signal and the signal after the receiving process to the measurement section 405.

The measurement section 405 conducts measurements with respect to the received signals. The measurement section 405 can be constituted by a measurer, a measurement circuit, or a measurement device that can be described based on general understanding of the technical field to which the present disclosure pertains.

For example, the measurement section 405 may perform RRM measurements, CSI measurements and so on based on the received signals. The measurement section 405 may measure the received power (for example, RSRP), the received quality (for example, RSRQ, SINR, SNR), the signal strength (for example, RSSI), transmission path information (for example, CSI), and so on. The measurement results may be output to the control section 401.

Moreover, the transmitting/receiving section 203 can receive setting information used to apply the transmit diversity (e.g., STBC) to the uplink symbol. In the case where multi-slot transmission is set, the transmitting/receiving section 203 can perform UL transmission (PUSCH or PUCCH) over a plurality of slots.

In the case where the number of uplink symbols in the given period (e.g., a slot or one hop in the slot) is odd, the control section 401 can determine a symbol pair to which the STBC is applied over a plurality of symbols in the given period.

In the case where the number of uplink symbols in the given period is odd, the control section 401 can determine a symbol pair to which the STBC is applied within the time of a specific symbol (e.g., the last symbol) in the given period.

In the case where multi-slot transmission is set, the control section 401 can determine, as the symbol pair, a plurality of symbols of different slots (e.g., the last symbol of the odd-numbered slot and the head symbol of the even-numbered slot) among the slots performing the multi-slot transmission.

In the case where multi-slot transmission is set and the value obtained by subtracting the number of symbols of the demodulation reference signal (DMRS) from the number of symbols of the uplink-shared channel (PUSCH) in the given period is odd, the control section 401 can determine a plurality of symbols in different slots as the symbol pair.

In the case where the multi-slot transmission is set, the control section 401 does not necessarily determine the symbols in the given period as the symbol pair in the slot performing the multi-slot transmission.

The control section 401 can set the subcarrier spacing of a specific symbol in the given period to an even multiple of the subcarrier spacing of another symbol.

### (Hardware Configuration)

Note that the block diagrams that have been used to describe the above embodiments illustrate blocks in functional units. These functional blocks (configuration units) may be implemented in arbitrary combinations of at least one of hardware or software. Also, the method for implementing each functional block is not particularly limited. That is, each functional block may be achieved by a single device physically or logically aggregated, or may be achieved by directly or indirectly connecting two or more physically or logically separate devices (using wires, radio, or the like, for example) and using these plural devices. The functional block may be achieved by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and so on. For example, a functional block (configuration unit) that causes transmission to function may be called as a transmitting section, a transmitter and the like. In any case, as described above, the implementation method is not particularly limited.

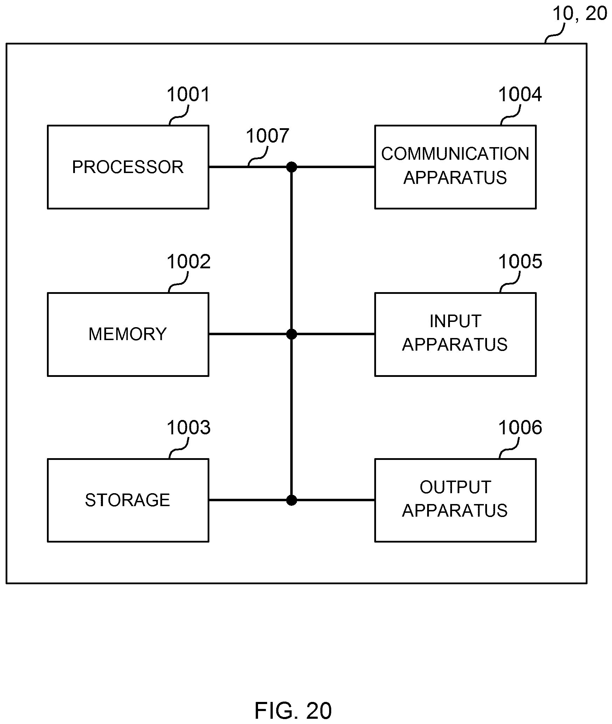

For example, the base station, the user terminal, and so on according to one embodiment of the present disclosure may function as a computer that executes the processing of the radio communication method of the present disclosure. Fig. 20 is a diagram illustrating an exemplary hardware structure of a base station and a user terminal according to an embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be replaced by "circuit," "device," "unit" and so on. The hardware configuration of the base station 10 and the user terminal 20 may be designed to include one or more of the apparatuses illustrated in the drawings, or may be designed not to include some apparatuses.

For example, although only one processor 1001 is shown, a plurality of processors may be provided. Furthermore, processes may be implemented with one processor, or processes may be implemented in parallel, in sequence, or in different manners, on two or more processors. Note that the processor 1001 may be implemented with one or more chips.

Each function of the base station 10 and the user terminal 20 is implemented by, for example, reading given software (program) into hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, by running an operating system. The processor 1001 may be configured with a central processing unit (CPU), which includes interfaces with peripheral equipment, a control device, a computing apparatus, a register, and so on. For example, the above-described baseband signal processing section 104 (204), call processing section 105 and so on may be implemented by the processor 1001.

Furthermore, the processor 1001 reads programs (program codes), software modules, data, and so on from at least one of the storage 1003 or the communication apparatus 1004 into the memory 1002, and executes various processing according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register", a "cache", a "main memory (primary storage apparatus)" and so on. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for performing inter-computer communication via at least one of a wired network or a wireless network, and for example, is referred to as "network device", "network controller", "network card", "communication module", and the like. The communication apparatus 1004 may be configured to include a high frequency switch, a duplexer, a filter, a frequency synthesizer and so on in order to implement, for example, at least one of frequency division duplex (FDD) or time division duplex (TDD). For example, the above-described transmitting/receiving antennas 101 (201), amplifying sections 102 (202), transmitting/receiving sections 103 (203), communication path interface 106, and so on may be implemented by the communication apparatus 1004. The transmitting/receiving section 103 may be implemented by physically or logically separating a transmitting section 103a and a receiving section 103b.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the base station 10 and the user terminal 20 may be configured to include hardware such as a microprocessor, a digital signal processor (DSP), an application-specific integrated circuit (ASIC), a programmable logic device (PLD), a field programmable gate array (FPGA), and so on, and part or all of the functional blocks may be implemented by the hardware. For example, the processor 1001 may be implemented with at least one of these pieces of hardware.

### (Variations)

Note that the terminology used in the present disclosure and the terminology that is needed to understand the present disclosure may be replaced with other terms that convey the same or similar meanings. For example, at least one of "channels" or "symbols" may be replaced with "signals" (or "signaling"). Also, "signals" may be replaced with "messages". A reference signal can be abbreviated as an "RS", and may be referred to as a "pilot", a "pilot signal" and so on, depending on which standard applies. Furthermore, a "component carrier (CC)" may be referred to as a "cell," a "frequency carrier," a "carrier frequency" and so on.

A radio frame may be formed with one or more durations (frames) in the time domain. Each of one or more periods (frames) constituting a radio frame may be referred to as a "subframe". Furthermore, a subframe may be formed with one or multiple slots in the time domain. A subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain, and so on.

A slot may be formed with one or more symbols in the time domain (Orthogonal Frequency Division Multiplexing (OFDM) symbols, Single Carrier Frequency Division Multiple Access (SC-FDMA) symbols, or the like). Also, a slot may be a time unit based on numerology.

A slot may include a plurality of minislots. Each minislot may be formed with one or more symbols in the time domain. Also, a minislot may be referred to as a "subslot". Each minislot may be formed with fewer symbols than a slot. A PDSCH (or PUSCH) transmitted in a time unit larger than a minislot may be referred to as PDSCH (PUSCH) mapping type A. A PDSCH (or PUSCH) transmitted using a minislot may be referred to as "PDSCH (PUSCH) mapping type B".

A radio frame, a subframe, a slot, a minislot and a symbol all represent the time unit in signal communication. A radio frame, a subframe, a slot, a minislot, and a symbol may be each called by other applicable names. Note that time units such as a frame, a subframe, a slot, a minislot, and a symbol in the present disclosure may be replaced with each other.

For example, one subframe may be referred to as a "transmission time interval (TTI)," or a plurality of consecutive subframes may be referred to as a "TTI," or one slot or mini-slot may be referred to as a "TTI." That is, at least one of a subframe or a TTI may be a subframe (1 ms) in existing LTE, may be a shorter period than 1 ms (for example, one to thirteen symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. Note that when TTI is given, a time interval (for example, the number of symbols) in which the transport blocks, the code blocks, the codewords, and the like are actually mapped may be shorter than TTI.

Note that, when one slot or one minislot is referred to as a "TTI," one or more TTIs (that is, one or more slots or one or more minislots) may be the minimum time unit of scheduling. Also, the number of slots (the number of minislots) to constitute this minimum time unit of scheduling may be controlled.

TTI having a time length of 1 ms may be called usual TTI (TTI in LTE Rel. 8-12), normal TTI, long TTI, a usual subframe, a normal subframe, a long subframe, a slot, or the like. A TTI that is shorter than the usual TTI may be referred to as "shortened TTI", "short TTI", "partial TTI" (or "fractional TTI"), "shortened subframe", "short subframe", "minislot", "sub-slot", "slot", or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be 12, for example. The number of subcarriers included in the RB may be determined based on numerology.

Also, an RB may include one or more symbols in the time domain, and may be one slot, one minislot, one subframe or one TTI in length. One TTI, one subframe, and the like each may be formed with one or more resource blocks.

Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, one RE may be a radio resource field of one subcarrier and one symbol.

The bandwidth part (BWP) (which may be called partial bandwidth and the like) may represent a subset of consecutive common RB (common resource blocks) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE does not need to assume to transmit or receive a given signal/channel outside the active BWP. Note that "cell", "carrier", and the like in the present disclosure may be replaced with "BWP".

Note that the structures of radio frames, subframes, slots, minislots, symbols and so on described above are merely examples. For example, configurations pertaining to the number of subframes included in a radio frame, the number of slots included in a subframe or radio frame, the number of mini-slots included in a slot, the number of symbols and RBs included in a slot or a mini-slot, the number of subcarriers included in an RB, the number of symbols in a TTI, the symbol length, the length of cyclic prefixes (CPs) and so on can be variously changed.

Furthermore, the information and parameters described in the present disclosure may be represented in absolute values, represented in relative values with respect to given values, or represented using other corresponding information. For example, a radio resource may be specified by a given index.

The names used for parameters and so on in the present disclosure are in no respect limiting. In addition, an equation and so on using these parameters may differ from those explicitly disclosed in the present disclosure. Since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals, and the like described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals, and the like can be output at least either from higher layers to lower layers, or from lower layers to higher layers. Information, signals and so on may be input and output via a plurality of network nodes.

The information, signals and so on that are input and/or output may be stored in a specific location (for example, in a memory), or may be managed in a control table. The information, signals and so on to be input and/or output can be overwritten, updated or appended. The information, signals and so on that are output may be deleted. The information, signals and so on that are input may be transmitted to other pieces of apparatus.

The reporting of information is by no means limited to the aspects/embodiments described in the present disclosure, and may be performed using other methods. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages", and can be, for example, an RRC connection setup (RRCConnectionSetup) message, RRC connection reconfiguration (RRCConnectionReconfiguration) message, and so on. Also, MAC signaling may be reported using, for example, MAC control elements (MAC CEs (Control Elements)).

Also, reporting of given information (for example, reporting of information to the effect that "X holds") does not necessarily have to be sent explicitly, and can be sent implicitly (for example, by not reporting this piece of information, or by reporting another piece of information, and so on).

Decisions may be made in values represented by one bit (0 or 1), may be made in Boolean values that represent true or false, or may be made by comparing numerical values (for example, comparison against a given value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server, or other remote sources by using at least one of wired technologies (coaxial cables, optical fiber cables, twisted-pair cables, digital subscriber lines (DSLs), and the like) or wireless technologies (infrared radiation, microwaves, and the like), at least one of these wired technologies or wireless technologies are also included in the definition of communication media.

The terms "system" and "network" used in the present disclosure may be used interchangeably.

In the present disclosure, the terms such as "precoding", "precoder", "weight (precoding weight)", "quasi-co-location (QCL)", "transmission configuration indication state (TCI state))", "spatial relation", "spatial domain filter", "transmission power", "phase rotation", "antenna port", "antenna port group", "layer", " "number of layers", "rank", "beam", "beam width", "beam angle", "antenna", "antenna element", and "panel" may be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. The base station may be called a term such as a macro cell, a small cell, a femto cell, a pico cell, and the like.

A base station can accommodate one or more (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to all or part of the coverage area of at least one of a base station or a base station subsystem that provides communication services within this coverage.

In the present disclosure, the terms "mobile station (MS)", "user terminal", "user equipment (UE)", "terminal", and the like may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station or a mobile station may be referred to as transmitting apparatus, receiving apparatus, communication apparatus, and so on. Note that at least one of the base station or the mobile station may be a device mounted on a mobile unit, a mobile unit itself, or the like. The moving body may be a transportation (for example, a car, an airplane and so on), an unmanned moving body (for example, a drone, an autonomous car, and so on), or a (manned or unmanned) robot. Note that at least one of the base station or the mobile station also includes a device that does not necessarily move during a communication operation. For example, at least one of the base station or the mobile station may be an IoT (Internet of Things) device such as a sensor.

Furthermore, the base stations in the present disclosure may be replaced with the user terminal. For example, each aspect/embodiment of the present disclosure may be applied to a structure in which communication between the base station and the user terminal is replaced with communication among a plurality of user terminals (which may be referred to as, for example, D2D (Device-to-Device), V2X (Vehicle-to-Everything) and so on). In this case, the user terminal 20 may be configured to have the functions of the base station 10 described above. In addition, the wording such as "up" and "down" may be replaced with the wording corresponding to the terminal-to-terminal communication (for example, "side"). For example, an uplink channel and a downlink channel may be replaced with a side channel.

Likewise, the user terminal in the present disclosure may be replaced with a base station. In this case, the base station 10 may be configured to have the functions of the user terminal 20 described above.

Certain actions that have been described in the present disclosure to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, regarding the methods described in the present disclosure, elements of various steps are presented using an illustrative order, and are not limited to the presented particular order.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New Radio Access Technology (New-RAT), New Radio (NR), New radio access (NX), Future generation radio access (FX), Global System for Mobile communications (GSM; registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and/or next generation systems or the like that are enhanced based on these. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on."

Reference to elements with designations such as "first", "second", and so on as used in the present disclosure does not generally limit the number/quantity or order of these elements. These designations may be used in the present disclosure only for convenience, as a method for distinguishing between two or more elements. In this way, reference to the first and second elements does not imply that only two elements may be employed, or that the first element must precede the second element in some way.

The terms "judging (determining)" as used in the present disclosure may encompass a wide variety of actions. For example, "judging (determining)" may be interpreted to mean making judgements and determinations related to judging, calculating, computing, processing, deriving, investigating, looking up, search, inquiry (for example, looking up in a table, database, or another data structure), ascertaining, and so on.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" may be interpreted to mean making judgements and determinations related to resolving, selecting, choosing, establishing, comparing and so on. In other words, to "judge" and "determine" may be interpreted to mean making judgements and determinations related to some action.

In addition, to "judge (determine)" may be replaced with "assuming", "expecting", "considering", and so on.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other". Note that the term may mean that "A and B are respectively different from C". The terms such as "leave" "coupled" and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be implemented with corrections and modifications, without departing from the spirit and scope of the invention defined by the recitations of claims. Consequently, the description of the present disclosure is provided for the purpose of exemplification and explanation, and has no limitative meaning to the invention according to the present disclosure.

## Claims

1. A user terminal comprising:
a receiving section configured to receive setting information used to apply a space-time block code (STBC) to an uplink symbol; and
a control section configured to determine, in a case where a number of uplink symbols in a given period is odd, a symbol pair to which the STBC is applied over a plurality of symbols in the given period or within a time of a specific symbol in the given period.

2. The user terminal according to claim 1, wherein the control section determines, in a case where multi-slot transmission is set, as the symbol pair, a plurality of symbols in different slots out of the slots in which the multi-slot transmission is performed.

3. The user terminal according to claim 2, wherein the control section determines, in a case where the multi-slot transmission is set and a value obtained by subtracting a number of symbols of a demodulation reference signal from a number of symbols of an uplink-shared channel in the given period is odd, as the symbol pair, a plurality of symbols in different slots.

4. The user terminal according to claim 1, wherein the control section does not determine, in a case where multi-slot transmission is set, as the symbol pair, symbols in the given period in a slot in which the multi-slot transmission is performed.

5. The user terminal according to claim 1, wherein the control section sets a subcarrier spacing of a specific symbol in the given period to an even multiple of the subcarrier spacing of another symbol.

6. A radio communication method of a user terminal, comprising:
receiving setting information used to apply a space-time block code (STBC) to an uplink symbol; and
determining, in a case where a number of uplink symbols in a given period is odd, a symbol pair to which the STBC is applied over a plurality of symbols in the given period or within a time of a specific symbol in the given period.
